# EUROPÄISCHE PATENTSCHRIFT

(11) **EP 2 454 982 B1**
(45) Veröffentlichungstag und Bekanntmachung des Hinweises auf die Patenterteilung: **03.08.2016**
(21) Anmeldenummer: 12000955.0
(22) Anmeldetag: 21.03.2009
(51) Int. Cl.: A47L 9/14, A47L 9/20, A47L 5/36, A47L 9/00, B01D 46/02

(54) **Betriebsverfahren für ein Sauggerät mit einem Filtersack und Sauggerät dazu**
Operating method for a suction device with a filter sack and suction device for same
Procédé de fonctionnement pour un appareil d'aspiration doté d'un sac-filtre et appareil d'aspiration correspondant

(43) Veröffentlichungstag der Anmeldung: 23.05.2012
(62) Teilanmeldung aus: 09400014.8
(73) Patentinhaber: Festool GmbH, 73240 Wendlingen am Neckar (DE)
(72) Erfinder: Walter, Hartmut, 71332 Waiblingen (DE); Steimel, Johannes, Dr., 73272 Neidlingen (DE)
(74) Vertreter: Patentanwälte Bregenzer und Reule Partnerschaftsgesellschaft mbB

(56) Entgegenhaltungen:
- EP-A- 1 922 969
- EP-A1- 0 338 479
- EP-A1- 1 123 724
- WO-A-2004/100746
- WO-A-2008/014795
- DE-U1- 9 307 112
- GB-A- 107 637
- US-A- 2 951 553

## Beschreibung

Die Erfindung betrifft ein Betriebsverfahren zum Betreiben eines Sauggeräts und ein Sauggerät zur Durchführung des Betriebsverfahrens mit einem Saugergehäuse und einem in dem Saugergehäuse angeordneten Saugmotor zum Erzeugen eines Saugstroms, mit einem in dem Saugergehäuse angeordneten Sammelraum zum Sammeln von aus dem Saugstrom abgesonderten Partikeln, mit einem Saugeinlass zum Einströmen des Saugstroms in den Sammelraum, wobei an den Saugeinlass ein in dem Sammelraum anordenbarer Filtersack anschließbar ist, und mit einem aus dem Sammelraum zu dem Saugmotor führenden, neben einem Ausström-Filtersack-Wandabschnitt des Filtersacks angeordneten Saugauslass, wobei sich beim Betrieb des Sauggeräts aus dem Saugstrom abgesonderte Partikel an dem dem Saugauslass zugewandten Ausström-Filtersack-Wandabschnitt einen Filterkuchenbelag bildend ablagern.

Ein Sauggerät für ein derartiges Betriebsverfahren ist in EP 1 922 969 A2 erläutert.

Im Saugergehäuse eines aus DE 101 30 995 A1 bekannten Sauggerätes ist in der Regel ein strömungsdurchlässiger Filtersack angeordnet. Dieser Filtersack setzt sich beim Betrieb des Sauggerätes mit einem Filterkuchenbelag zu, insbesondere im Bereich des Saugeinlasses, wo der Saugstrom seine größte Kraft entwickelt. Dadurch wird der Filtersack insbesondere im Bereich des Ausström-Filtersack-Wandabschnittes nach und nach immer weniger durchlässig für den Saugstrom, so dass die Saugleistung des Sauggerätes insgesamt abnimmt.

Es ist daher die Aufgabe der vorliegenden Erfindung, ein Sauggerät sowie ein Betriebsverfahren dazu aufzuzeigen, bei dem diese nachteiligen Effekte nicht oder in schwächerem Maße auftreten.

Zur Lösung der Aufgabe sind ein Betriebsverfahren gemäß der technischen Lehre des Anspruchs 1 und ein Sauggerät gemäß der technischen Lehre des Anspruchs 3 vorgesehen.

Ein erfindungsgemäßer Grundgedanke ist es, dass der Filtersack so ausgestaltet ist, dass dessen der Ausströmöffnung zugewandter Ausström-Filtersack-Wandabschnitt und/oder eine diesen enthaltende Ausström-Filtersack-Wand beispielsweise auf Grund ihres Gewichts, das durch den anhaftenden Filterkuchenbelag sogar noch vergrößert wird, in Richtung einer gegenüberliegenden Filtersack-Wand zusammensackt. Dadurch bilden sich in dem Filterkuchenbelag, bei dem es sich auch um eine dünne Staubschicht oder Partikelschicht handeln kann, Risse. Durch den zusammengesackten, sich zumindest abschnittsweise üblicherweise durchbiegenden Ausström-Filtersack-Wandabschnitt findet zudem eine zumindest teilweise Ablösung des Filterkuchenbelages statt.

Beispielsweise lösen sich Randabschnitte von Filterkuchenteilbereichen von der Innenwandseite des Filtersackes im Bereich des Ausström-Filtersack-Wandabschnittes ab. Beim anschließenden Wiedereinschalten des Saugmotors bläht sich der Filtersack zweckmäßigerweise schlagartig auf. Jedenfalls legt sich zumindest der Ausström-Filtersack-Wandabschnitt, vorzugsweise jedoch insgesamt der Filtersack an den Sammelraum begrenzende Komponenten des Sauggerätes an, so dass der Filterkuchenbelag zumindest teilweise von dem Ausström-Filtersack-Wandabschnitt abfällt und sich im Innenraum des Filtersackes, beispielsweise dessen Boden, sammelt. Jedenfalls ist zumindest der Ausström-Filtersack-Wandabschnitt, vorzugsweise auch neben diesem angeordnete Wandabschnitte des Filtersackes, von dem Filterkuchenbelag im Wesentlichen oder ganz befreit, so dass Luft, die durch den Saugeinlass in den Filtersack einströmt, diesen nahezu ungehindert, jedenfalls im Wesentlichen unbegrenzt durch einen Filterkuchenbelag, wieder verlässt. Die Saugleistung des Sauggerätes wird auch bei längerem Betrieb aufrechterhalten.

Weiterhin macht sich die Erfindung zu Nutze, dass das Sauggerät in der Regel häufig ein- und ausgeschaltet wird. Somit findet der Selbstreinigungsprozess gemäß der Erfindung immer wieder statt, so dass die Saugqualität des erfindungsgemäßen Sauggerätes zumindest im Wesentlichen uneingeschränkt auch über längere Zeitperioden zur Verfügung steht. Ein unerwünschtes Anhaften eines Filterkuchenbelages, der die Saugleistung des Sauggerätes verringert, ist bei einem erfindungsgemäßen Sauggerät zumindest verringert, wenn nicht gar beseitigt.

Eine vorteilhafte Ausgestaltung der Erfindung sieht vor, dass der Ausström-Filtersack-Wandabschnitt oder auch weitere Wandabschnitte des Filtersackes an eine den Sammelraum begrenzende Wand des Sauggehäuses beim Einschalten des Saugmotors anschlagen, so dass der Filterkuchenbelag von dem jeweiligen Wandabschnitt abfällt.

Vorzugsweise ist der Filtersack geometrisch so bemessen, dass der Ausström-Filtersack-Wandabschnitt beim Ausschalten des Saugmotors in Richtung der ihm gegenüberliegenden Filtersack-Wand zusammensackt. Auch ein Gewicht des Ausström-Filtersack-Wandabschnittes kann vorteilhaft so bemessen sein, dass dieser Effekt vorteilhaft auftritt. Selbstverständlich können auch andere Faktoren zu dem erfindungsgemäßen Effekt beitragen, beispielsweise dass der Ausström-Filtersack-Wandabschnitt, eine diesen umfassende Ausström-Filtersack-Wand oder der Filtersack an sich aus einem Vliesmaterial, insbesondere einem vollsynthetischen Vliesmaterial, sind. Dieses Material ist besonders weich und biegt sich beim Zusammensacken durch. Dadurch löst sich der Filterkuchenbelag.

Eine bevorzugte geometrische Ausgestaltung sieht vor, dass der Saugeinlass zumindest ein Drittel, z.B. auch eine Hälfte oder mehr, des Filtersackes an seiner den Ausström-Filtersack-Wandabschnitt aufweisenden Seite, insbesondere im durch den Saugstrom aufgeblähten Zustand, überdeckt. Mithin nimmt also der Saugeinlass eine verhältnismäßig große Fläche ein, so dass der Ansaugeffekt, bei dem sich der Filterkuchenbelag von der Wand des Filtersackes zumindest abschnittsweise löst, besonders hoch ist.

Der Ausström-Filtersack-Wandabschnitt oder auch einen diesen umfassende Filtersack-Wand sowie die gegenüberliegende Filtersack-Wand können seitlich unmittelbar miteinander verbunden sein. Eine andere Variante sieht eine Art Klotzbeutel vor, d.h. dass zwischen dem Ausström-Filtersack-Wandteil und der gegenüberliegenden Filtersack-Wand eine Art Zwickel oder ein Seitenteil - wenn kein Klotzbeutel gebildet ist - angeordnet ist.

Eine Flächenausdehnung des Ausström-Filtersack-Wandabschnittes oder einer diesen umfassenden Filtersackwand umfasst zweckmäßigerweise eine Fläche von mindestens 0,2 m², vorzugsweise 0,3 m². Besonders bevorzugt ist eine Flächenausdehnung von 0,35 m² oder die beim Ausführungsbeispiel von etwa 0, 37 - 0,39 m², wobei bei diesen Flächen auch im aufgeblähten Zustand an Seitenwänden des Sammelraums anliegende Teile der den Ausström-Filtersack-Wandabschnitt umfassenden Wand des Filtersacks umfasst sein können. Die große Flächenausdehnung des Ausström-Filtersack-Wandabschnittes oder der diesen umfassenden Filtersack-Wand bedingt zweckmäßigerweise ein hohes Gewicht, das das oben beschriebene Zusammensacken in Richtung der gegenüberliegenden Filtersackwand unterstützt.

Auch eine Höhenausdehnung des Sammelraums oder eine entsprechende Höhe des Filtersackes kann zu dem "Zusammensackeffekt", der die spätere Ablösung des Filterkuchenbelages unterstützt, beitragen. So ist beispielsweise eine Höhe des Sammelraums, zweckmäßigerweise korrespondierend ein Abstand des Ausström-Filtersack-Wandabschnitts und der diesem gegenüberliegenden Wand des Filtersacks mindestens 15 cm. Eine bevorzugte Ausführungsform sieht eine Höhe bzw. einen Abstand von 20 cm, vorzugsweise von 23 - 29 cm vor. Es versteht sich, dass zwischen der den Ausström-Filtersack-Wandabschnitt umfassenden Wand und der gegenüberliegenden Wand ein Zwischenteil angeordnet sein kann, das zweckmäßigerweise jedoch besonders weich ist, so dass der Zusammensackeffekt im Sinne der Erfindung nicht durch den Zwickel oder die Seitenwand beeinträchtigt ist. Beispielsweise ist im Falle eines Klotzbeutels eine leicht biegbare oder faltbare Zwickel-Wandung vorgesehen.

Zu einem Ablösen des Filterkuchenbelages von der Filtersack-Wand trägt vorzugsweise auch bei, wenn der Sammelraum zumindest im Bereich des Ausström-Filtersack-Wandabschnittes, vorzugsweise auch daneben oder in dessen unmittelbarer Umgebung im Wesentlichen glattflächig ist. Dadurch wird vorzugsweise ein Ansaugeffekt des Ausström-Filtersack-Wandabschnittes an Innenseitenabschnitte, z.B. Wandabschnitte, des Sammelraumes verstärkt, was den Ablöseprozess des Filterkuchens verbessert.

An dem Saugeinlass ist zweckmäßigerweise ein Filter, insbesondere in einer Ausgestaltung als ein Filtermodul, angeordnet. Dieses Filtermodul ist an seiner dem Sammelraum zugewandten Seite vorzugsweise im Wesentlichen glattflächig, was im Sinne der obigen Ausführungen der glattflächigen Ausgestaltung des Sammelraumes ist.

Der Ausström-Filtersack-Wandabschnitt und/oder eine diesen umfassende Ausström-Filtersack-Wand oder auch der Filtersack als Ganzes bestehen zweckmäßigerweise aus einem vollsynthetischen Material und/oder aus einem Filtervlies, das selbstverständlich ebenfalls vollsynthetisch sein kann. Davon ausgenommen ist vorteilhaft eine Frontwand zum Anschluss an den Saugeinlass, die vorteilhaft z.B. aus Karton, im Wesentlichen biegesteifem Kunststoffmaterial oder dergleichen bestehen kann. Die Filtervlieswand oder vollsynthetische Wand hat den Vorteil, dass die den Prozess des Zusammensackens im Sinne der Erfindung erleichtert.

Auf mechanischer oder elektrotechnischer Seite können weitere Maßnahmen getroffen sein, die das erfindungsgemäße Ablösen des Filterkuchenbelages von dem Filtersack verbessern.

Beispielsweise kann eine Zeitschaltung vorgesehen sein, die zur Ablösung des Filterkuchenbelags von dem Ausström-Filtersack-Wandabschnitt nach einer vorbestimmten, insbesondere einstellbaren, Zeit eine Saugleistung des Saugmotors verringert und anschließend wieder erhöht. Beispielsweise kann die Zeitschaltung den Saugmotor ein- und ausschalten.

Weiterhin vorteilhaft ist eine Druckstoßeinrichtung zur Erzeugung eines Druckstoßes auf den Filtersack, insbesondere auf dessen Ausström-Filtersack-Wandabschnitt. Der Druckstoß wirkt in Richtung der dem Ausström-Filtersack-Wandabschnitt gegenüberliegenden Filtersack-Wand, was den Effekt des Zusammensackens verstärkt. Die Druckstoßeinrichtung kann vorzugsweise zum Ausstoßen des Druckstoßes aus dem Saugauslass strömungstechnisch mit diesem verbunden sein, beispielsweise an diesem angeordnet sein.

Eine bevorzugte Ausführungsform sieht vor, dass der Saugeinlass an einer Oberseite des Sammelraums angeordnet ist. Der Ausström-Filtersack-Wandabschnitt bildet zweckmäßigerweise einen Bestandteil einer Deckwand des Filtersacks oder die Deckwand als Ganzes. Somit wird also durch Schwerkraft der Effekt des Zusammensackens besonders verstärkt. Es versteht sich, dass in alternativen Ausführungsformen der Erfindung auch vorgesehen sein kann, dass der Ausström-Filtersack-Wandabschnitt beispielsweise nicht unmittelbar an einer Deckwand, sondern auch an einer schräg oben seitlich angeordneten Wand oder an einem dortigen Wandabschnitt des Filtersackes angeordnet sein kann.

Nachfolgend wird ein Ausführungsbeispiel der Erfindung anhand der Zeichnung erläutert. Es zeigen:
- Figur 1: eine perspektivische Frontal-Schrägansicht eines Sauggerätes,
- Figur 2: eine Unterseitenansicht eines Gehäuseoberteils des Sauggeräts aus Figur 1,
- Figur 3: ein Gehäuseunterteil des Sauggeräts gemäß Figur 1 von oben,
- Figur 4: eine Querschnittsansicht des Sauggeräts gemäß Figur 1 etwa entlang einer Schnittlinie A-A in Figur 1 mit einem eingezeichneten Saugstrom,
- Figur 5: die Querschnittsansicht gemäß Figur 4, jedoch nach Abschalten des Saugmotors,
- Figur 6: die Querschnittsansicht gemäß Figuren 4, 5, jedoch nach Wiedereinschalten des Saugmotors,
- Figur 7: eine perspektivische Schrägansicht von oben auf ein Sammelgehäuseteil des Sauggeräts gemäß Figuren 1 bis 6 mit einem eingelegten, aufgeblähten Filtersack etwa entsprechend der Querschnittsansichten gemäß Figuren 4 und 6 und
- Figur 8: eine Draufsicht auf den in Figur 7 gezeigten Filtersack.

Im Inneren eines Saugergehäuses 11 eines Sauggeräts 10 ist ein Saugmotor 12 zum Erzeugen eines Saugstroms 13 angeordnet, der über einen Saugeinlass 14 in das Saugergehäuse 11 einsaugbar ist. An den Saugeinlass 14 ist ein nicht dargestellter Schlauch anschließbar. Im Inneren des Saugergehäuses 11 befindet sich ferner eine Filteranordnung 15 zum Absondern von Partikeln aus dem Saugstrom 13.

An einer Oberseite 16 des Saugergehäuses 11 befindet sich eine Aufnahme 17 zur Aufnahme des Saugschlauches und/oder eines Anschlusskabels 18, mit dem das Sauggerät 10 an ein elektrisches Versorgungsnetz anschließbar ist. Alternativ wäre ein Sauggerät mit einem Akkumulator möglich. Das Sauggerät 10 ist ein transportables Sauggerät, an dessen Unterseite Fahrrollen 19, 20 angeordnet sind. Die vorderen Fahrrollen 20 sind Lenkrollen. Weiterhin kann das Sauggerät 10 an einem Tragegriff 21 an der Oberseite 16 ergriffen werden.

Zwischen einer den Saugeinlass 14 aufweisenden Frontwand 22 und der Oberseite 16 des Saugergehäuses 11 erstreckt sich eine Bedienwand 23 mit Bedienelementen 24 zur Bedienung des Sauggeräts 10. Die Bedienwand 23 ist zweckmäßigerweise schräg geneigt, so dass die Bedienelemente 24 von schräg oben vorn leicht bedienbar sind.

Die Bedienelemente 24 umfassen einen Schalter 25, der sozusagen einen Hauptschalter bildet. Mit dem Schalter 25 kann der Saugmotor 12 ein- und ausgeschaltet werden. Ferner ist ein Automatikmodus einstellbar, bei dem der Saugmotor 12 immer dann läuft, wenn ein angeschlossener Verbraucher elektrischen Strom über das Sauggerät 10 erhält, was später noch erläutert wird. Mit Hilfe eines Saugleistungs- oder Drehzahlschalters 26 kann eine Leistung des Saugmotors 12 eingestellt werden. Ein Anpassungsschalter 27 ermöglicht eine elektrische Anpassung des Sauggeräts 10 an einem jeweiligen Saugeinlass 14 angeschlossenen Saugschlauch. Mit einem Reinigungsschalter 28 ist eine Reinigungsfunktion des Sauggeräts 10 einschaltbar und/oder parametrierbar. Eine fest am Sauggerät 10 installierte Steckdose 29 ermöglicht das Einstecken eines elektrischen Energieverbrauchers. Die Steckdose 29 ist mit dem Anschlusskabel 18 elektrisch verbunden.

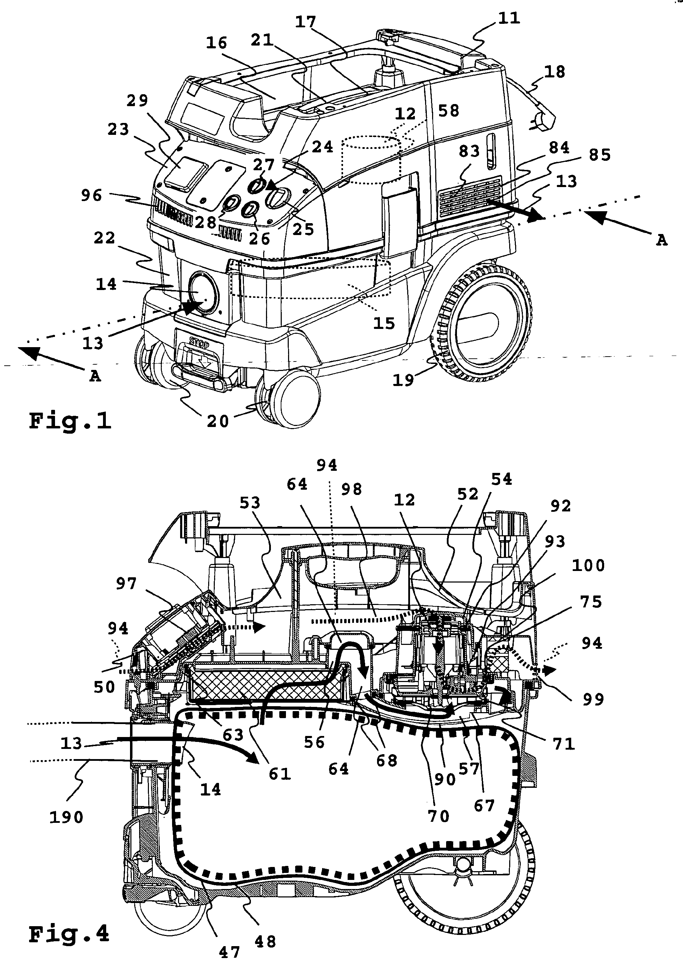

Das Saugergehäuse 11 ist zweiteilig aufgebaut und weist ein Motorgehäuseteil 30 sowie ein z.B. ein Filtergehäuseteil bildendes Sammelgehäuseteil 31 auf. Das Motorgehäuseteil 30 bildet ein Gehäuseoberteil 32, das auf das ein Gehäuseunterteil 33 bildende Sammelgehäuseteil 31 aufgesetzt ist, siehe Figur 1. An einer Unterseite 34a des Motorgehäuseteils 30 ist eine im Wesentlichen umlaufende Nut 34 vorhanden, in die ein Eingreifrand 35 des Sammelgehäuseteils 31 eingreift. Mithin sitzt also das Gehäuseoberteil 32 auf dem Gehäuseunterteil 33 mit seinem äußeren Umfangsrandbereich 36 auf.

Das Motorgehäuseteil 30 ist mit dem Sammelgehäuseteil 31 durch manuell, werkzeuglos betätigbare Haltemittel 37 verbunden. Die Haltemittel 37 umfassen beispielsweise Laschen 38, die den Umfangsrandbereich 36 übergreifen und in Halteausnehmungen 39 am Gehäuseunterteil 33 eingreifen. Die Laschen 38 sind an Lagern 40 des Motorgehäuseteils 30 schwenkbeweglich und/oder längsverschieblich gelagert, so dass sie in Eingriff oder außer Eingriff mit den Halteausnehmungen 39 gebracht werden können.

Die Lager 40 und die zugeordneten Halteausnehmungen 39 sind unmittelbar übereinander etwa im Bereich einer Längsmitte 41 von Seitenwänden 42, 43 des Motorgehäuseteils 30 und des Sammelgehäuseteils 31 angeordnet.

Ein Boden 44 sowie eine den Saugeinlass 14 aufweisende Frontwand 45 und eine Heckwand 46 des Sammelgehäuseteils 31 begrenzen einen Innenraum 47 des Sammelgehäuseteils 31. In dem Innenraum 47 ist ein großformatiger Filtersack 48 der Filteranordnung 15 optional anordenbar.

Das Sauggerät 10 ist allerdings auch ohne den Filtersack 48 betreibbar. Der Innenraum 47 ist zum Motorgehäuseteil 30 hin vorteilhaft offen. Der Innenraum 47 bildet einen Sammelraum 110 zum Sammeln von aus dem Saugstrom 13 abgesonderten Partikeln und/oder abgesonderter Feuchtigkeit.

Das Motorgehäuseteil 30 weist neben seinen beiden Seitenwänden 42 eine mit später noch erläuterten Durchbrechungen versehene Bodenwand 49, die dem Innenraum 47 des Sammelgehäuseteils 31 zugewandt ist, eine Frontwand 50, eine Heckwand 51 sowie eine Deckwand 52 auf, die zugleich den Boden der Aufnahme 17 bildet. Die Wände 49 bis 52 definieren einen Innenraum 53, in dem unter anderem ein Motoraufnahmeraum 54 für den Saugmotor 12 sowie eine mit dem Motoraufnahmeraum 54 bzw. dem Saugmotor 12 kommunizierende Luftführungsanordnung angeordnet sind. Abgesehen von Zuströmöffnungen bzw. Ausströmöffnungen der Luftführungsanordnung ist der Innenraum 53 geschlossen.

Die Bodenwand 49 weist im Wesentlichen zwei Öffnungen auf, nämlich einen Saugeinlass 56 einer Luftführungsanordnung 55 für den in durchgezogenen Pfeillinien dargestellten Saugstrom 13 sowie eine Montageöffnung 57, durch die der als Motormodul 58 ausgestaltete Saugmotor 12 in den Motoraufnahmeraum 54 eingebracht oder aus diesem wieder entfernt werden kann. Die Montageöffnung 57 ist so bemessen, dass das Motormodul 58 als Ganzes in den Motoraufnahmeraum 54 eingesetzt oder von dort wieder entnommen werden kann. Dazu ist lediglich ein mit Schrauben 59 am Motorgehäuseteil 30 festgelegter Deckel 60 zu entfernen, der die Montageöffnung 57 im am Motorgehäuseteil 30 montierten Zustand verschließt. Anstelle oder in Ergänzung zu dem Schrauben 59 könnte man Schnellverschlüsse vorsehen, vorzugsweise solche für eine werkzeuglose Montage, beispielsweise Klemmhebel oder Knickhebel oder dergleichen. Der Saugmotor 12 ist zu Wartungszwecken zugänglich, beispielsweise zum Kohlen- oder Bürstenwechsel im Verschleißfall. Ein einfacher Wechsel des Motormoduls 58 ist als Ganzes möglich. Die Montageöffnung 57 ist also an der Bodenwand 49 des Motorgehäuseteils 30, mithin an einer von dessen Saugergehäuse-Wänden 49a angeordnet.

Einem zum Saugmotor 12 führenden Saugeinlass 56 ist ein Hauptfilter 61 vorgelagert. Der Hauptfilter 61 ist als Filtereinsatz 62 ausgestaltet, der in einer Filteraufnahme 63 der Bodenwand 49 aufgenommen ist. Der Filtereinsatz 62 bzw. die Filteraufnahme 63 erstrecken sich etwa von der Längsmitte 41 bis zur Frontwand 50, so dass sie etwa die Hälfte der Fläche der Bodenwand 49 einnehmen. Die andere Fläche der Bodenwand 49 bzw. die restliche Fläche wird von dem Deckel 60 überdeckt.

Der Saugstrom 13 wird durch den Saugeinlass 14, an dem ein Saugschlauch 190 anordenbar ist, in den Filtersack 48 eingesaugt. Der Filtersack 48 nimmt im Saugstrom 13 enthaltene Partikel auf. Der Saugstrom 13 wird vom Saugmotor 12 erzeugt, der den Saugstrom 13 über den Hauptfilter 61 durch den Saugeinlass 56 hindurch ansaugt. Der Saugeinlass 56 ist strömungsabseitig, beim Sauggerät 10 oberseitig, des Hauptfilters 61 angeordnet. Der Saugeinlass 56 ist ein Einlass eines im Querschnitt im Wesentlichen U-förmigen Saugkanalabschnitts 64, der fest im Innenraum 53 des Motorgehäuseteils 30 angeordnet ist. Ein Saugkanalauslass 65 des Saugkanalabschnitts 64 kommuniziert mit einem Luftführungskanaleinlass 66 eines Luftführungskanalabschnitts 67 des Deckels 60. Der Saugkanalauslass 65 und der Luftführungskanaleinlass 66 sind strömungsdicht miteinander verbunden. Zweckmäßigerweise ist zwischen dem Saugkanalauslass 65 und dem Luftführungskanaleinlass 66 eine Dichtung 68 vorgesehen.

Der Luftführungskanalabschnitt 67 mündet gegenüber einem Turbineneinlass 70 einer Saugturbine 71 des Motormoduls 58 angeordnet. Die Saugturbine 71 saugt den Saugstrom 13 durch den Turbineneinlass 70 an und bläst ihn nach radial außen durch einen ebenfalls in den Deckel 60 integrierten Ausblaskanal aus. Der von der Saugturbine 71 nach radial außen ausströmende Saugstrom 13 strömt über Schalldämpfer 84, die zugleich optional eine Filterfunktion haben können, hindurch und sodann durch Saugstromauslässe 85 an den Seitenwänden 42 nach außen aus dem Motorgehäuseteil 30 hinaus.

Ein Kühlluftstrom 94 strömt durch einen Kühllufteinlass 96 an der Frontwand 50 des Motorgehäuseteils 30 in das Saugergehäuse 11 ein. Der Kühlluftstrom 94 strömt zunächst an einer Steuerung 97 des Sauggeräts 10 vorbei und kühlt diese. Über einen zwischen der Filteraufnahme 63 für den Filtereinsatz 62 und der Deckwand 52 verlaufenden Kühlluftkanal 98 strömt der Kühlluftstrom 94 weiter zum Motoraufnahmeraum 54, in dem er von oben her in einen Kühllufteinlass des Motormoduls 58 einströmt. Der Kühlluftstrom 94 durchströmt den Saugmotor und strömt sodann nach hinten aus dem Saugergehäuse 11 aus. An der Heckwand 51 des Motorgehäuseteils 30 ist hierfür ein Kühlluftauslass 99 vorgesehen. Selbstverständlich sind auch für die Kühlluftschalldämmmaßnahmen sinnvoll. So ist beispielsweise zwischen dem Motoraufnahmeraum 54 und dem Kühlluftauslass 99 ein Schalldämpfer 100 vorgesehen.

Der Filtersack 48 umfasst vorliegend eine Deckwand 170 sowie eine Bodenwand 171, die seitlich miteinander verbunden, beispielsweise miteinander verklebt und/oder miteinander verschweißt sind. Die Deckwand 170, vorzugsweise auch die Bodenwand 171, bestehen zweckmäßigerweise aus einem vollsynthetischen Material, beispielsweise aus einem synthetischen Filtervlies oder dergleichen. Jedenfalls sind die Deckwand 170 und die Bodenwand 171 leicht bieg- und verformbar. Ein Filtereinlass 172 an einem Anschlussstück 173 ist zum Anschluss des Filtersacks 48 an den Saugeinlass 14 vorgesehen. Der Saugeinlass 14 umfasst beispielsweise eine Rohrmuffe 136, die in den Sammelraum 110 vorsteht. Das Anschlussstück 173 besteht zweckmäßigerweise aus einem im Wesentlichen biegesteifen Material, beispielsweise Karton und/oder Kunststoff, was den Anschluss an der Rohrmuffe 136 erleichtert. Das Anschlussstück 173 umfasst ferner in an sich bekannter Weise ein Schiebeelement 174 oder ein Zugelement zum Verschließen des Filtereinlasses 172.

Eine Länge von Langseiten 184 der Deckwand 170 und der Bodenwand 171 beträgt z.B. ca. 80 Zentimeter, eine Länge von Kurzseiten 185 der Deckwand 170 und der Bodenwand 171 beträgt z.B. ca. 50 Zentimeter. Dadurch ergibt sich eine Flächenausdehnung der Deckwand 170 von etwa 0,4 Quadratmetern, wobei diese Fläche zwar im Wesentlichen der Unterseite 34a der Motorteils, d.h. einer oberen Begrenzung des Sammelraums 110, zugeordnet ist, aber auch teilweise den Wänden 43, 45, 46.

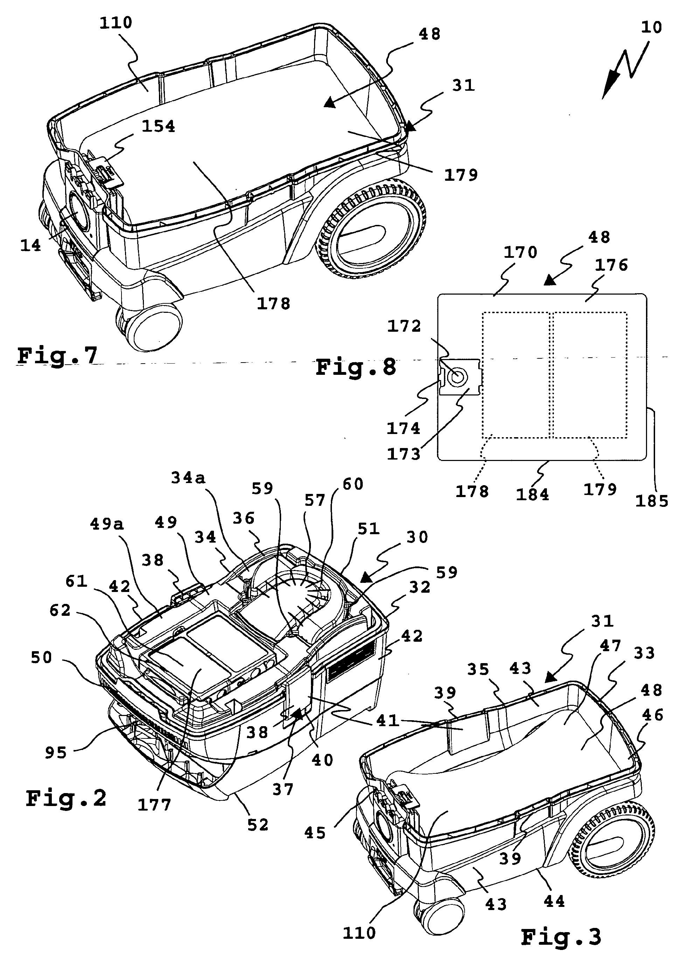

Neben dem Saugeinlass 14, beispielsweise oberhalb der Rohrmuffe 136, ist zweckmäßigerweise ein Filtersackhalter 154 angeordnet. Der Filtersackhalter 154 ist schwenkbeweglich an der Frontwand 45 angelenkt und in Richtung seiner das Anschlussstück 173 klemmenden Stellung federbelastet, siehe Figur 7. Zum Entfernen des Filtersackes 148 wird der Filtersackhalter 154 vom Filtersack 48 weggeschwenkt, was durch einen Schriftzug "open" angedeutet ist.

Beim Betrieb des Sauggerätes 10 bläht sich der Filtersack 48 auf, siehe Figuren 4, 6 und 7. Der Saugstrom 13 strömt durch den Saugeinlass 14 in den Innenraum 175 des Filtersackes 48 ein. Durch den Saugmotor 12 wird ein Sog erzeugt, dass sich die flexiblen, strömungsdurchlässigen Wände 170, 171 an die Innenseiten des Sammelraumes 110 anlegen, nämlich an die Innenseite der Frontwand 45, der Heckwand 48 sowie der Seitenwände 43 und ferner auch des Bodens 44. Dabei liegen Abschnitte der Deckwand 170 und der Bodenwand 171, insbesondere im Bereich ihrer gemeinsamen Verbindung, an den seitlichen Wänden 43, 45 und 46 an. In diesem Zusammenhang sei betont, dass zwischen einer Deckwand und einer Bodenwand eines erfindungsgemäßen Filtersackes auch Zwischenteile oder Seitenteile vorgesehen sein können, beispielsweise zwickelförmige, die sich an den entsprechenden Seitenwänden eines Sammelraumes anlegen, beim Sammelraum 110 beispielsweise an den Wänden 45, 46 und 43.

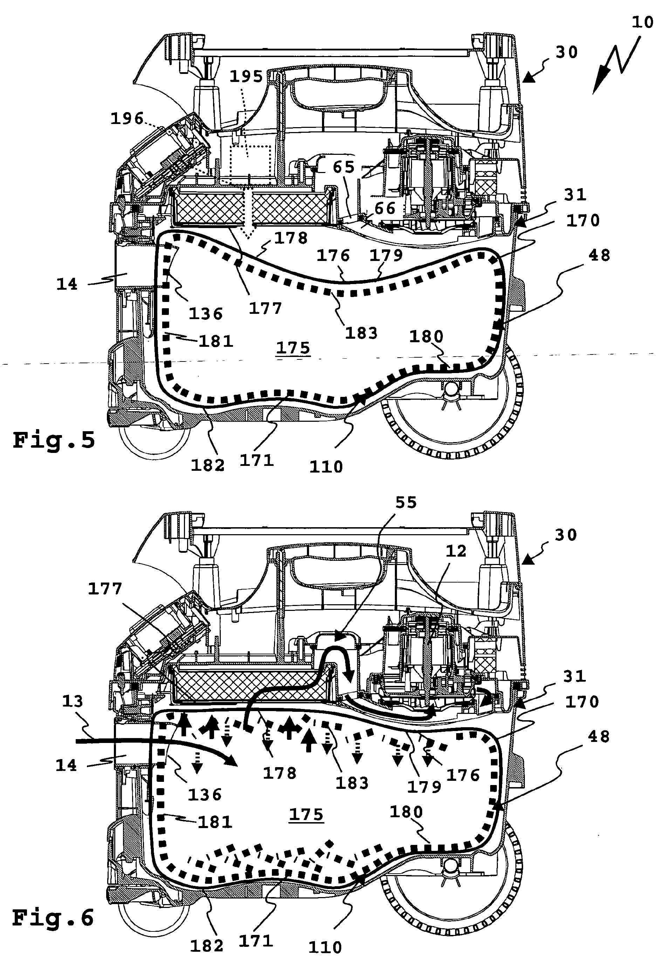

Eine Oberseite 176 des Filtersacks 48, der durch einen mittleren, großflächigen Abschnitt der Deckwand 170 gebildet ist, legt sich beim Betrieb des Saugmotors 12, d.h. bei Vorhandensein des Saugstroms 13 an die Unterseite 34a des Motorgehäuseteils 30 an. Diese Unterseite 34a begrenzt den Sammelraum 110 oberseitig. An der Unterseite 34a sind zum einen der Filtereinsatz 62 und zum anderen der den anderen Bereich der Unterseite 34a im Wesentlichen überdeckende Deckel 60 angeordnet. Der Filtereinsatz 62 und/oder die Filteraufnahme 63 definieren oder begrenzen einen Saugauslass 177, über den der Saugstrom 13 aus dem Sammelraum 110 ausströmt. Insbesondere am Saugauslass 177, vorliegend aber auch an anderen Wandbereichen des Sammelraums 110 herrscht vorliegend Unterdruck. Jedenfalls liegt der Filtersack 48 mit einem Ausström-Filtersack-Wandabschnitt 178 beim Betrieb des Saugmotors 12, d.h. bei Vorhandensein des Saugstroms 13, an der dem Sammelraum 110 zugewandten Seite des Filtereinsatzes 62 im Wesentlichen an, siehe Figuren 4 und 6. Auch ein neben dem Saugauslass 177 befindlicher Teil der Deckwand 170, nämlich ein Filtersack-Wandabschnitt 179, liegt an der Unterseite 34a an, nämlich im Bereich des Deckels 60. Mithin liegt also nahezu die gesamte Oberseite 176 des Filtersackes 148 bei laufendem Saugmotor 12 an einer oberseitigen Begrenzung des Sammelraums 110 zumindest im Wesentlichen flächig an.

Durch den Saugstrom 13 werden Partikel 180 in den Innenraum 175 des Filtersacks 48 eingesaugt und werden durch dessen Wände 170, 171 dort zurückgehalten. Der Saugstrom 13 strömt durch den Saugauslass 177 aus dem Innenraum 175 aus. Die Partikel 180 lagern sich an den Innenseiten der Wände 170, 171 an und bilden dort einen Filterkuchenbelag 188. Insbesondere im Bereich des Saugauslasses 177, d.h. des Ausström-Filtersack-Wandabschnittes 178 behindert der Filterkuchenbelag 181 mit einem Filterkuchenbelagabschnitt 183 den Saugstrom 13, siehe beispielsweise Figur 4. Hier schafft die Erfindung Abhilfe:

Wenn nämlich der Saugmotor 12 abgeschaltet wird, reißt der Saugstrom 13 ab, siehe Figur 5. Der Ausström-Filtersack-Wandabschnitt 178 sowie der danebenliegende Filtersack-Wandabschnitt 179 sacken wie in Figur 5 dargestellt nach unten in Richtung einer gegenüberliegenden Filtersack-Wand 182, d.h. in Richtung des Bodens 44 des Filter- oder Sammelgehäuseteils 31 bzw. der Bodenwand 170 des Filtersacks 48. Dabei biegt sich die Deckwand 170 durch, was in dem dort anhaftenden Filterkuchenbelagabschnitt 183 Risse verursacht.

Wenn nun der Saugmotor 12 wieder eingeschaltet wird, wird der Ausström-Filtersack-Wandabschnitt 178 und zweckmäßigerweise auch der danebenliegende Filtersack-Wandabschnitt 179 in Richtung des Saugauslasses 177 gezogen, wobei die beiden Abschnitte zweckmäßigerweise an der Unterseite 34a des Motorgehäuseteils 30 anschlagen. Dadurch fällt der Filterkuchenbelagabschnitt 183 wie in Figur 6 angedeutet nach unten, in Richtung des Bodens des Filtersackes 48, wodurch zumindest der Ausström-Filtersack-Wandabschnitt 178 zumindest im Wesentlichen von dem Filterkuchenbelag 181 befreit wird. Jedenfalls ist eine Strömung des Saugstroms 13 durch den Saugauslass 177 dann im Wesentlichen unbehindert, was die Saugleistung des Sauggeräts 10 erhält.

Wie aus der Zeichnung erkennbar, nimmt der Saugauslass 177 eine große Fläche der die Oberseite des Sammelraums 110 begrenzenden Komponenten des Sauggerätes ein, vorzugsweise zumindest etwa die Hälfte. Dementsprechend großflächig ist die Deckwand 170, insbesondere der Unterseite 34a bzw. Oberseite des Sammelraums 110 zugeordnete Teil der Deckwand 170, was den Effekt des Zusammensackens (Figur 5) unterstützt.

Zudem ist der Sammelraum 110 verhältnismäßig hoch, korrespondierend der Filtersack 48 im aufgeblähten Zustand. Beispielsweise beträgt eine Höhe oder Tiefe des Sammelraums 110, d.h. eine Höhe der Seitenwände 43, insbesondere im Bereich des Saugeunlasses 14 bei einer Ausführungsform eines erfindungsgemäßen Sauggerätes 23 cm, bei einer größeren, in der Zeichnung nicht dargestellten Ausführungsform 29 cm. Dementsprechend groß ist der Abstand der Oberseite des Filtersacks 48 von dessen Unterseite bzw. der Abstand der Deckwand 170 von der Bodenwand 171, wenn der Filtersatz 48 aufgebläht ist. Dadurch steht ein großer Raum für den Filtersack 48 zur Verfügung, wenn dieser nach unten in sich zusammensackt, siehe Figur 5.

Der Prozess des Aufblähens und Zusammensackens und dabei Ablösens des Filterkuchenbelages 181 gemäß Figuren 4, 5 und 6 wird selbstverständlich bei jedem Ein- und Ausschalten des Saugmotors 12 wiederholt, so dass zumindest der Ausström-Filtersack-Wandabschnitt 178 im Wesentlichen frei von Partikeln 180 gehalten wird.

Zudem kann die Steuerung 97 zu einem insbesondere zyklischen Ein- und Ausschalten des Saugmotors 12 und/oder zu einem Verringern und wieder Erhöhen einer Saugleistung des Saugmotors 12 ausgestaltet sein, um dadurch das erfindungsgemäße Ablösen des Filterkuchenbelags 181 hervorzurufen. Ein Verringern und wieder Erhöhen einer Saugleistung des Saugmotors 12 kann die Steuerung 97vorzugsweise in Abhängigkeit einer zeitlichen Bedingung und/oder einer Messbedingung, z.B. einer Erfassung einer Strömungsgeschwindigkeit des Saugstroms 13, d.h. einem Indikator für eine z.B. durch den Filterkuchenbelag 181 verringerte Saugleistung, durchführen.

Es versteht sich nämlich, dass der erfindungsgemäße Effekt auch dann erzielbar ist, wenn der Saugmotor 12 nicht vollständig abgeschaltet wird, sondern nur in seiner Saugleistung reduziert, jedenfalls soweit, dass der Ausström-Filtersack-Wandabschnitt 178 in Richtung der gegenüberliegenden Filtersack-Wand 182 zumindest teilweise zusammensacken kann.

Ferner ist auch möglich, dass eine vorzugsweise über den Saugauslass 17 wirkende Druckstoßeinrichtung 195 (Figur 5) einen Druckstoß 196 erzeugt, um den Ausström-Filtersack-Wandabschnitt 178 in Richtung der gegenüberliegenden Filtersack-Wand zu betätigen.

## Patentansprüche

1. Betriebsverfahren zum Betreiben eines Sauggeräts (10) mit einem Saugergehäuse (11) und einem in dem Saugergehäuse (11) angeordneten Saugmotor (12) zum Erzeugen eines Saugstroms (13), mit einem in dem Saugergehäuse (11) angeordneten Sammelraum (110) zum Sammeln von aus dem Saugstrom (13) abgesonderten Partikeln (180), mit einem Saugeinlass (14) zum Einströmen des Saugstroms (13) in den Sammelraum (110), wobei an den Saugeinlass (14) ein in dem Sammelraum (110) anordenbarer Filtersack (48) anschließbar ist, und mit einem aus dem Sammelraum (110) zu dem Saugmotor (12) führenden, neben einem Ausström-Filtersack-Wandabschnitt (178) des Filtersacks (48) angeordneten Saugauslass (177), wobei sich beim Betrieb des Sauggeräts (10) aus dem Saugstrom (13) abgesonderte Partikel (180) an dem dem Saugauslass (177) zugewandten Ausström-Filtersack-Wandabschnitt (178) einen Filterkuchenbelag (181) bildend ablagern, **gekennzeichnet durch**
- Abschalten des Saugmotors (12), so dass die Ausström-Filtersack-Wandabschnitt (178) in Richtung einer dem Ausström-Filtersack-Wandabschnitt (178) gegenüberliegenden Filtersack-Wand (182) zusammensackt, wobei der der Saugauslass (177) etwa ein Drittel oder eine Hälfte des Filtersacks (48) an seiner den Ausström-Filtersack-Wandabschnitt (178) aufweisenden Seite überdeckt, und
- Einschalten des Saugmotors (12), so dass der Ausström-Filtersack-Wandabschnitt (178) **durch** den Saugstrom (13) in Richtung des Saugauslasses (177) gezogen wird, wobei der Filterkuchenbelag (181) von dem Ausström-Filtersack-Wandabschnitt (178) **durch** das Zusammensacken und/oder die Bewegung zum Saugauslass (177) hin zumindest teilweise abfällt.

2. Betriebsverfahrens nach Anspruch 1, **dadurch gekennzeichnet, dass** der Ausström-Filtersack-Wandabschnitt (178) und/oder weitere Wandabschnitte des Filtersacks (48) an eine den Sammelraum (110) begrenzende Wand des Saugergehäuses (11) bei dem Einschalten des Saugmotors (12) anschlagen derart, dass der Filterkuchenbelag (181) von dem Ausström-Filtersack-Wandabschnitt (178) und/oder den weiteren Wandabschnitten des Filtersacks (48) abfällt.

3. Sauggerät zur Durchführung des Betriebsverfahrens nach einem der vorhergehenden Ansprüche mit einem Saugergehäuse (11) und einem in dem Saugergehäuse (11) angeordneten Saugmotor (12) zum Erzeugen eines Saugstroms (13), mit einem in dem Saugergehäuse (11) angeordneten Sammelraum (110) zum Sammeln von aus dem Saugstrom (13) abgesonderten Partikeln (180), mit einem Saugeinlass (14) zum Einströmen des Saugstroms (13) in den Sammelraum (110), wobei an den Saugeinlass (14) ein in dem Sammelraum (110) anordenbarer Filtersack (48) anschließbar ist, und mit einem aus dem Sammelraum (110) zu dem Saugmotor (12) führenden, neben einem Ausström-Filtersack-Wandabschnitt (178) des Filtersacks (48) angeordneten Saugauslass (177), wobei sich beim Betrieb des Sauggeräts (10) aus dem Saugstrom (13) abgesonderte Partikel (180) an dem dem Saugauslass (177) zugewandten Ausström-Filtersack-Wandabschnitt (178) einen Filterkuchenbelag (181) bildend ablagern, **dadurch gekennzeichnet, dass** der Sammelraum (110) und/oder der Filtersack (48) so bemessen und ausgestaltet sind, dass der Ausström-Filtersack-Wandabschnitt (178) beim Ausschalten des Saugmotors (12) in Richtung einer der Ausström-Filtersack-Wandabschnitt (178) gegenüberliegenden Filtersack-Wand (182) zusammensackt und beim Einschalten des Saugmotors (12) durch den Saugstrom (13) in Richtung des Saugauslasses (177) gezogen wird, wobei der Filterkuchenbelag (181) von dem Ausström-Filtersack-Wandabschnitt (178) durch das Zusammensacken und/oder die Bewegung zum Saugauslass (177) hin zumindest teilweise abfällt, wobei der der Saugauslass (177) etwa ein Drittel oder eine Hälfte des Filtersacks (48) an seiner den Ausström-Filtersack-Wandabschnitt (178) aufweisenden Seite überdeckt.

4. Sauggerät nach Anspruch 3, **dadurch gekennzeichnet, dass** eine Flächenausdehnung und/oder ein Gewicht des dem Saugauslass (177) zugewandten Ausström-Filtersack-Wandabschnitts (178) so bemessen sind, dass der Ausström-Filtersack-Wandabschnitt (178) beim Ausschalten des Saugmotors (12) in Richtung einer der Ausström-Filtersack-Wandabschnitt (178) gegenüberliegenden Filtersack-Wand (182) zusammensackt.

5. Sauggerät nach Anspruch 3 oder 4, **dadurch gekennzeichnet, dass** der Ausström-Filtersack-Wandabschnitt (178) oder eine den Ausström-Filtersack-Wandabschnitt (178) umfassende Ausström-Filtersack-Wand und die dem Ausström-Filtersack-Wandabschnitt (178) oder der Ausström-Filtersack-Wand gegenüberliegende Filtersack-Wand (182) seitlich unmittelbar oder mittels eines Seitenteils, insbesondere einen Klotzbeutel bildend, miteinander verbunden sind, wobei das Seitenteil vorzugsweise biegeflexibel ist.

6. Sauggerät nach einem der Ansprüche 3 bis 5, **dadurch gekennzeichnet, dass** der Sammelraum (110) so ausgestaltet ist, dass beim Betrieb des Saugmotors (12) ein neben dem Ausström-Filtersack-Wandabschnitt (178) angeordneter Filtersack-Wandabschnitt des Filtersacks (48) in Richtung eines neben dem Saugeinlass (14) angeordneten Sammelraum-Wandabschnitts gezogen wird und insbesondere an dem Sammelraum-Wandabschnitt anliegt und/oder beim Einschalten des Saugmotors (12) an dem Sammelraum-Wandabschnitt anschlägt.

7. Sauggerät nach einem der Ansprüche 3 bis 6, **dadurch gekennzeichnet, dass** eine den Ausström-Filtersack-Wandabschnitt (178) umfassende oder bildende Filtersack-Wand (170) des Filtersacks (48) eine Fläche von mindestens 0,2 Quadratmetern, vorzugsweise mindestens 0,3 Quadratmetern, besonders bevorzugt mindestens 0,35 Quadratmetern aufweist.

8. Sauggerät nach einem der Ansprüche 3 bis 7, **dadurch gekennzeichnet, dass** eine Höhe des Sammelraums (110) und/oder ein Abstand des Ausström-Filtersack-Wandabschnitts (178) und der diesem gegenüberliegenden Wand (182) des Filtersacks (48) mindestens 15 Zentimeter, vorzugsweise mindestens 20 Zentimeter, insbesondere mindestens 23 bis 29 Zentimeter, beträgt.

9. Sauggerät nach einem der Ansprüche 3 bis 8, **dadurch gekennzeichnet, dass** eine dem Ausström-Filtersack-Wandabschnitt (178) und/oder einem neben dem Ausström-Filtersack-Wandabschnitt (178) angeordneten Wandabschnitt des Filtersacks (48) zugewandte, den Sammelraum (110) begrenzende Oberfläche Sauggeräts (10) im wesentlichen glattflächig ist.

10. Sauggerät nach einem der Ansprüche 3 bis 9, **dadurch gekennzeichnet, dass** an dem Saugauslass (177) ein Filter, insbesondere ein Filtermodul, angeordnet ist.

11. Sauggerät nach einem der Ansprüche 3 bis 10, **dadurch gekennzeichnet, dass** der Ausström-Filtersack-Wandabschnitt (178) und/oder eine den Ausström-Filtersack-Wandabschnitt (178) umfassende Ausström-Filtersack-Wand und/oder der Filtersack (48) als Ganzes im wesentlichen, insbesondere vollständig, aus einem vollsynthetischen Material und/oder aus einem Filtervlies bestehen.

12. Sauggerät nach einem der Ansprüche 3 bis 11, **dadurch gekennzeichnet, dass** es eine Steuerung (97), insbesondere eine Zeitschaltung, aufweist, die zur Ablösung des Filterkuchenbelags (181) von dem Ausström-Filtersack-Wandabschnitt (178) nach einer vorbestimmten Zeit und/oder in Abhängigkeit eines Sensorsignals eine Saugleistung des Saugmotors (12) verringert, insbesondere den Saugmotor (12) ausschaltet, und anschließend erhöht, insbesondere den Saugmotor (12) einschaltet.

13. Sauggerät nach einem der Ansprüche 3 bis 12, **dadurch gekennzeichnet, dass** es eine Druckstoßeinrichtung (195) zur Erzeugung eines Druckstoßes (196) auf den Filtersack (48), insbesondere den Ausström-Filtersack-Wandabschnitt (178), aufweist, wobei der Druckstoß (196) den Ausström-Filtersack-Wandabschnitt (178) in Richtung der ihm gegenüberliegenden Filtersack-Wand (182) betätigt, wobei die Druckstoßeinrichtung (196) (195) zweckmäßigerweise zum Ausstoßen des Druckstoßes (196) aus dem Saugauslass (177) strömungstechnisch mit dem Saugauslass (177) verbunden ist.

14. Sauggerät nach einem der Ansprüche 3 bis 13, **dadurch gekennzeichnet, dass** der Saugeinlass (14) an einer Oberseite des Sammelraums (110) angeordnet ist und/oder dass der Ausström-Filtersack-Wandabschnitt (178) einen Bestandteil einer Deckwand (170) des Filtersacks (48) oder die Deckwand (170) als Ganzes bildet.

## Claims

1. Operating method for the operation of a suction device (10) with a vacuum cleaner housing (11) and a suction motor (12) mounted in the vacuum cleaner housing (11) to generate a suction flow (13), with a collection space (110) provided in the vacuum cleaner housing (11) for the collection of particles (180) separated out of the suction flow (13), with a suction inlet (14) for the inflow of the suction flow (13) into the collection space (110), wherein at the suction inlet (14) a filter bag (48) locatable in the collection space (110) may be connected, and with a suction outlet (177) leading out of the collection space (110) to the suction motor (12) and arranged next to an outflow filter bag wall section (178) of the filter bag (48), wherein during operation of the suction device (10), particles (180) separated from the suction flow (13) are deposited on the outflow filter bag wall section (178) facing the suction outlet (177) to form a filter cake coating (181), **characterised by**
- switching-off of the suction motor (12) so that the outflow filter bag wall section (178) slumps in the direction of a filter bag wall (182) opposite the outflow filter bag wall section (178), wherein the suction outlet (177) covers around one-third or one-half of the filter bag (48) on that side of it which has the outflow filter bag wall section (178), and
- switching-on of the suction motor (12), so that the outflow filter bag wall section (178) is drawn by the suction flow (13) towards the suction outlet (177), wherein the filter cake coating (181) detaches at least partly from the outflow filter bag wall section (178) due to the slumping and/or the movement towards the suction outlet (177).

2. Operating method according to claim 1 **characterised in that** the outflow filter bag wall section (178) and/or other wall sections of the filter bag (48) strike a wall of the vacuum cleaner housing (11) bounding the collection space (110) in such a way that the filter cake coating (181) detaches from the outflow filter bag wall section (178) and/or the other wall sections of the filter bag (48).

3. Suction device for carrying out the operating method according to any of the preceding claims, with a vacuum cleaner housing (11) and a suction motor (12) mounted in the vacuum cleaner housing (11) to generate a suction flow (13), with a collection space (110) provided in the vacuum cleaner housing (11) for the collection of particles (180) separated out of the suction flow (13), with a suction inlet (14) for the inflow of the suction flow (13) into the collection space (110), wherein at the suction inlet (14) a filter bag (48) locatable in the collection space (110) may be connected, and with a suction outlet (177) leading out of the collection space (110) to the suction motor (12) and arranged next to an outflow filter bag wall section (178) of the filter bag (48), wherein during operation of the suction device (10), particles (180) separated from the suction flow (13) are deposited on the outflow filter bag wall section (178) facing the suction outlet (177) to form a filter cake coating (181), **characterised in that** the collection space (110) and/or the filter bag (48) are so dimensioned and designed that the outflow filter bag wall section (178) slumps towards a filter bag wall (182) opposite the outflow filter bag wall section (178) when the suction motor (12) is switched off, and when the suction motor (12) is switched on it is pulled by the suction flow (13) towards the suction outlet (177), wherein the filter cake coating (181) detaches at least partly from the outflow filter bag wall section (178) due to the slumping and/or the movement towards the suction outlet (177), wherein the suction outlet (177) covers around one-third or one-half of the filter bag (48) on that side of it which has the outflow filter bag wall section (178).

4. Suction device according to claim 3, **characterised in that** the area and/or weight of the outflow filter bag wall section (178) facing the suction outlet (177) are so dimensioned that the outflow filter bag wall section (178) slumps towards a filter bag wall (182) opposite the outflow filter bag wall section (178) when the suction motor (12) is switched off.

5. Suction device according to any of claims 3 or 4, **characterised in that** the outflow filter bag wall section (178) or an outflow filter bag wall including the outflow filter bag wall section (178) and the filter bag wall (182) opposite the outflow filter bag wall section (178) or the outflow filter bag wall are joined to one another directly at the side or by means of a side part, in particular forming a block bag, wherein the side part is preferably flexible in bending.

6. Suction device according to any of claims 3 to 5, **characterised in that** the collection space (110) is so designed that, in operation of the suction motor (12), a filter bag wall section of the filter bag (48) adjacent to the outflow filter bag wall section (178) is drawn in the direction of a collection space wall section located adjacent to the suction inlet (14) and in particular abuts the collection space wall section and/or strikes against the collection space wall section when the suction motor (12) is switched on.

7. Suction device according to any of claims 3 to 6, **characterised in that** a filter bag wall (170) of the filter bag (48) including or forming the outflow filter bag wall section (178) has an area of at least 0.2 square metres, preferably at least 0.3 square metres, and especially preferably 0.35 square metres.

8. Suction device according to any of claims 3 to 7, **characterised in that** a height of the collection space (110) and/or a distance between the outflow filter bag wall section (178) and the opposite wall (182) of the filter bag (48) amounts to at least 15 centimetres, preferably at least 20 centimetres, and in particular at least 23 to 29 centimetres.

9. Suction device according to any of claims 3 to 8, **characterised in that** a suction device (10) surface bounding the collection space (110), facing the outflow filter bag wall section (178) and/or a wall section of the filter bag (48) located adjacent to the outflow filter bag wall section (178), is substantially smooth.

10. Suction device according to any of claims 3 to 9, **characterised in that** a filter, in particular a filter module, is provided at the suction outlet (177).

11. Suction device according to any of claims 3 to 10, **characterised in that** the outflow filter bag wall section (178) and/or an outflow filter bag wall including the outflow filter bag wall section (178) and/or the filter bag (48) as a whole are/is made substantially, in particular completely, of a fully synthetic material and/or of a filter fabric.

12. Suction device according to any of claims 3 to 11, **characterised in that** it has a control (97), in particular a timing circuit which, to detach the filter cake coating (181) from the outflow filter bag wall section (178) after a predetermined time and/or depending on a sensor signal, reduces the suction power of the suction motor (12), in particular switches off the suction motor (12), and then increases suction power, in particular switches on the suction motor (12).

13. Suction device according to any of claims 3 to 12, **characterised in that** it has a pressure impulse device (195) to generate a pressure impulse (196) on the filter bag (48), in particular the outflow filter bag wall section (178), wherein the pressure impulse (196) activates the outflow filter bag wall section (178) towards the filter bag wall (182) lying opposite, wherein the pressure impulse device (196) (195) is connected expediently for flow purposes to the suction outlet (177), to expel the pressure impulse (196) from the suction outlet (177).

14. Suction device according to any of claims 3 to 13, **characterised in that** the suction inlet (14) is provided on the upper side of the collection space (110) and/or that the outflow filter bag wall section (178) forms an integral part of a covering wall (170) of the filter bag (48) or the covering wall (170) as a whole.

## Revendications

1. Procédé de fonctionnement pour le fonctionnement d'un aspirateur (10) avec un boîtier d'aspirateur (11) et un moteur d'aspiration (12) agencé dans le boîtier d'aspirateur (11) pour la génération d'un courant d'aspiration (13), avec un espace collecteur (110) agencé dans le boîtier d'aspirateur (11) pour la collecte de particules (180) séparées du courant d'aspiration (13), avec une entrée d'aspiration (14) pour l'afflux du courant d'aspiration (13) dans l'espace collecteur (110), dans lequel un sac de filtration (48) pouvant être agencé dans l'espace collecteur (110) peut être raccordé à l'entrée d'aspiration (14), et avec une sortie d'aspiration (177) agencée à côté d'une section de paroi de sac de filtration d'écoulement (178) du sac de filtration (48) menant de l'espace collecteur (110) au moteur d'aspiration (12), dans lequel des particules (180) séparées du courant d'aspiration (13) lors du fonctionnement de l'aspirateur (10) se déposent en formant un revêtement de gâteau de filtration (181) sur la section de paroi de sac de filtration d'écoulement (178) tournée vers la sortie d'aspiration (177), **caractérisé par**
- l'arrêt du moteur d'aspiration (12) de sorte que la section de paroi de sac de filtration d'écoulement (178) s'effondre en direction d'une paroi de sac de filtration (182) en regard de la section de paroi de sac de filtration d'écoulement (178), dans lequel la sortie d'aspiration (177) recouvre environ un tiers ou une moitié du sac de filtration (48) sur son côté présentant la section de paroi de sac de filtration d'écoulement (178) et
- l'allumage du moteur d'aspiration (12) de sorte que la section de paroi de sac de filtration d'écoulement (178) soit tirée par le courant d'aspiration (13) en direction de la sortie d'aspiration (177), dans lequel le revêtement de gâteau de filtration (181) tombe au moins en partie de la section de paroi de sac de filtration d'écoulement (178) par l'effondrement et/ou le mouvement vers la sortie d'aspiration (177).

2. Procédé de fonctionnement selon la revendication 1, **caractérisé en ce que** la section de paroi de sac de filtration d'écoulement (178) et/ou d'autres sections de paroi du sac de filtration (48) butent contre une paroi délimitant l'espace collecteur (110) du boîtier d'aspirateur (11) lors de l'allumage du moteur d'aspiration (12) de telle manière que le revêtement de gâteau de filtration (181) tombe de la section de paroi de sac de filtration d'écoulement (178) et/ou des autres sections de paroi du sac de filtration (48).

3. Aspirateur pour la réalisation du procédé de fonctionnement selon l'une quelconque des revendications précédentes avec un boîtier d'aspirateur (11) et un moteur d'aspiration (12) agencé dans le boîtier d'aspirateur (11) pour la génération d'un courant d'aspiration (13), avec un espace collecteur (110) agencé dans le boîtier d'aspirateur (11) pour la collecte de particules (180) séparées du courant d'aspiration (13), avec une entrée d'aspiration (14) pour l'afflux du courant d'aspiration (13) dans l'espace collecteur (110), dans lequel un sac de filtration (48) pouvant être agencé dans l'espace collecteur (110) peut être raccordé à l'entrée d'aspiration (14), et avec une sortie d'aspiration (177) agencée à côté d'une section de paroi de sac de filtration d'écoulement (178) du sac de filtration (48), menant de l'espace collecteur (110) au moteur d'aspiration (12), dans lequel des particules (180) séparées du courant d'aspiration (13) se déposent en formant un revêtement de gâteau de filtration (181) lors du fonctionnement de l'aspirateur (10) sur la section de paroi de sac de filtration d'écoulement (178) tournée vers la sortie d'aspiration (177), **caractérisé en ce que** l'espace collecteur (110) et/ou le sac de filtration (48) sont dimensionnés et configurés de sorte que la section de paroi de sac de filtration d'écoulement (178) s'effondre lors de l'arrêt du moteur d'aspiration (12) en direction d'une paroi de sac de filtration (182) en regard de la section de paroi de sac de filtration d'écoulement (178) et soit tirée lors de l'entrée du moteur d'aspiration (12) par le courant d'aspiration (13) en direction de la sortie d'aspiration (177), dans lequel le revêtement de gâteau de filtration (181) tombe au moins en partie de la section de paroi de sac de filtration d'écoulement (178) par l'effondrement et/ou le mouvement vers la sortie d'aspiration (177), dans lequel la sortie d'aspiration (177) recouvre environ un tiers ou une moitié du sac de filtration (48) sur son côté présentant la section de paroi de sac de filtration d'écoulement (178).

4. Aspirateur selon la revendication 3, **caractérisé en ce qu'**une étendue de surface et/ou un poids de la section de paroi de sac de filtration d'écoulement (178) tournée vers la sortie d'aspiration (177) est dimensionné de sorte que la section de paroi de sac de filtration d'écoulement (178) s'effondre lors de l'arrêt du moteur d'aspiration (12) en direction d'une paroi de sac de filtration (182) en regard de la section de paroi de sac de filtration d'écoulement (178).

5. Aspirateur selon la revendication 3 ou 4, **caractérisé en ce que** la section de paroi de sac de filtration d'écoulement (178) ou une paroi de sac de filtration d'écoulement comprenant la section de paroi de sac de filtration d'écoulement (178) et la paroi de sac de filtration (182) en regard de la section de paroi de sac de filtration d'écoulement (178) ou à la paroi de sac de filtration d'écoulement sont reliées entre elles latéralement directement ou à l'aide d'une partie latérale, formant en particulier un sachet de grande taille, dans lequel la partie latérale est de préférence flexible et souple.

6. Aspirateur selon l'une quelconque des revendications 3 à 5, **caractérisé en ce que** l'espace collecteur (110) est configuré de sorte que lors du fonctionnement du moteur d'aspiration (12), une section de paroi de sac de filtration agencée à côté de la section de paroi de sac de filtration d'écoulement (178) du sac de filtration (48) est tirée en direction d'une section de paroi d'espace collecteur agencée à côté de l'entrée d'aspiration (14) et repose en particulier contre la section de paroi d'espace collecteur et/ou bute lors de l'allumage du moteur d'aspiration (12) contre la section de paroi d'espace collecteur.

7. Aspirateur selon l'une quelconque des revendications 3 à 6, **caractérisé en ce qu'**une paroi de sac de filtration (170) formant ou comprenant la section de paroi de sac de filtration d'écoulement (178) du sac de filtration (48) présente une surface d'au moins 0,2 mètre carré, de préférence au moins 0,3 mètre carré, de manière particulièrement préférée au moins 0,35 mètre carré.

8. Aspirateur selon l'une quelconque des revendications 3 à 7, **caractérisé en ce qu'**une hauteur de l'espace collecteur (110) et/ou une distance de la section de paroi de sac de filtration d'écoulement (178) et la paroi en regard de celle-ci (182) du sac de filtration (48) s'élève à au moins 15 centimètres, de préférence à au moins 20 centimètres, en particulier à au moins 23 à 29 centimètres.

9. Aspirateur selon l'une quelconque des revendications 3 à 8, **caractérisé en ce qu'**une surface de l'aspirateur (10) délimitant l'espace collecteur (110), tournée vers la section de paroi de sac de filtration d'écoulement (178) et/ou une section de paroi du sac de filtration (48) agencée à côté de la section de paroi de sac de filtration d'écoulement (178) est sensiblement à surface lisse.

10. Aspirateur selon l'une quelconque des revendications 3 à 9, **caractérisé en ce qu'**un filtre, en particulier un module de filtration est agencé sur la sortie d'aspiration (177).

11. Aspirateur selon l'une quelconque des revendications 3 à 10, **caractérisé en ce que** la section de paroi de sac de filtration d'écoulement (178) et/ou une paroi de sac de filtration d'écoulement comportant la section de paroi de sac de filtration d'écoulement (178) et/ou le sac de filtration (48) se compose dans l'ensemble sensiblement, en particulier complètement, d'un matériau synthétique plein et/ou d'un non-tissé filtrant.

12. Aspirateur selon l'une quelconque des revendications 3 à 11, **caractérisé en ce qu'**il présente une commande (97), en particulier un circuit de temporisation qui diminue pour le détachement du revêtement de gâteau de filtration (181) de la section de paroi de sac de filtration d'écoulement (178) après un temps prédéterminé et/ou en fonction d'un signal de capteur une puissance d'aspiration du moteur d'aspiration (12), en particulier éteint le moteur d'aspiration (12) et l'augmente ensuite, en particulier allume le moteur d'aspiration (12).

13. Aspirateur selon l'une quelconque des revendications 3 à 12, **caractérisé en ce qu'**il présente un dispositif de pression impulsionnelle (195) pour la génération d'une pression impulsionnelle (196) sur le sac de filtration (48), en particulier la section de paroi de sac de filtration d'écoulement (178), dans lequel la pression impulsionnelle (196) actionne la section de paroi de sac de filtration d'écoulement (178) en direction de la paroi de sac de filtration (182) qui lui est opposée, dans lequel le dispositif de pression impulsionnelle (196) (195) est relié de manière appropriée en écoulement à la sortie d'aspiration (177) pour l'éjection de la pression impulsionnelle (196) hors de la sortie d'aspiration (177).

14. Aspirateur selon l'une quelconque des revendications 3 à 13, **caractérisé en ce que** l'entrée d'aspiration (14) est agencée sur un côté supérieur de l'espace collecteur (110) et/ou **en ce que** la section de paroi de sac de filtration d'écoulement (178) forme une partie d'une paroi supérieure (170) du sac de filtration (48) ou la paroi supérieure (170) dans son ensemble.
